# EUROPEAN PATENT APPLICATION

(11) **EP 0 868 994 A2**
(43) Date of publication of application: **07.10.1998**
(21) Application number: 98302672.5
(22) Date of filing: 06.04.1998
(51) Int. Cl.: B29C 65/20, F16L 41/03

(54) **Beverage and coolant manifolds**

(30) Priority: 04.04.1997 GB 9706881; 06.08.1997 GB 9716534
(71) Applicant: VALPAR INDUSTRIAL LIMITED, Bangor, Down BT19 2QY, Northern Ireland (GB)
(72) Inventor: Becket, Robert Prentice, BT19 2QY, County Down, Northern Ireland (GB); Goodwin, Clive, BT19 2QY, County Down, Northern Ireland (GB)
(74) Representative: Earnshaw, Geoffrey Mark

(57) **Abstract**

Apparatus to simultaneously weld a number of branch pieces of small diameter tubing on to a main piece of small diameter tubing to partly or fully form a plastic manifold is described. The apparatus comprises gripping means and a number of heating elements, some or all being moveable between engaged and disengaged positions to engage the heating means with the surfaces of the pieces to be welded. Following disengagement of the heating means, the gripping means locate the heated surfaces together to effect the welds.

The apparatus provides flexibility, whilst still providing precision welding with fast, efficient production of small diameter manifolds.

The invention also comprises a plastic beverage manifold whose branches have shaped or reshaped ends to provide connection directly to other ports or parts, simplifying later installation of the manifold.

## Description

This invention relates to beverage and coolant manifolds made from plastics materials.

Presently, manifolds for the delivery and distribution of beverages or coolants for beverages are made from metal, particularly stainless steel. However, stainless steel is an expensive material, and can involve high tooling and/or machining costs to make even some simple beverage or coolant components, let alone complete manifolds. On the other hand, it is a material which can easily be welded to form branches etc.

Welding of plastics materials has been known for some time, e.g. GB 2146909A and EP 662390A. However, such welding has concentrated either on small hand-held devices, which are not suitable for high performance components, or mechanised equipment for the butt welding of large scale piping systems in the bulk delivery of e.g. gas, water etc.

According to one aspect of the present invention, there is provided apparatus to simultaneously weld a plurality of branch pieces of small diameter tubing on to a main piece of small diameter tubing to partly or fully form a plastic manifold comprising gripping means to hold each piece and a plurality of heating elements, at least one gripping means and all the heating means being reversibly moveable between engaged and disengaged positions, wherein the gripping means and/or heating means move to engage the heating means with the surfaces of all the pieces to be welded, and following disengagement of the heating means, the moveable gripping means move(s) to locate all the heated surfaces together for a predetermined time and pressure to effect the welds between the surfaces.

Preferably, the heating elements are adapted to heat the surfaces of both pieces to be welded together. Alternatively, there are two separate heating elements per weld, one for each surface.

The gripping means may be continuous jaws. Alternatively, the gripping means for the main piece and possibly the gripping means for the branch pieces comprise one or more sets of upper and/or lower discrete jaws. The jaws are preferably separately laterally moveable relative to each other along or parallel to the main axis of the main piece so as to allow the gripping means to hold irregular main or branch pieces, possibly having one or more existing branches thereon. The heating elements are also preferably moveable to maintain alignment with the branch gripping means.

To allow the flow of the beverage or coolant liquid between the two pieces once welded, an aperture must be made in the side of one piece. This aperture can be made prior to or after the welding. The tubing may be made from any suitable thermoplastic, preferably polyethylene

According to a second aspect of the present invention, there is provided a process for machine welding simultaneously a plurality of branch pieces of small diameter tubing onto a main piece of small diameter tubing to partly or fully form a plastic manifold comprising the steps of
(a) securing the pieces of tubing in gripping means;
(b) locating one or more heating elements against all the surfaces of the tubing to be welded;
(c) withdrawing said heating elements; and
(d) moving at least one of said gripping means to allow the heated surfaces to meet and con-join for a pre-determined time and pressure to effect the weld.

According to a third aspect of the present invention, there is provided a welded plastic beverage or coolant manifold obtainable from either the apparatus or the process as defined above.

According to a fourth aspect of the present invention, there is provided a branched plastic beverage or coolant manifold wherein two or more of the branches of the manifold have been welded simultaneously to the main piece of the manifold.

Such manifolds include manifolds for the delivery or circulation of a beverage, e.g. beer or a soft drink, or a coolant, e.g. water. The term "manifold" as used herein includes any pipe or chamber with a plurality of openings or branches.

The branch pieces may be of any suitable length, size, shape or design, and they may be rigid or flexible. They include standard pieces of tubing onto the free ends of which known couplings may be fitted. They also include pieces of tubing whose free ends have been adapted, i.e. shaped or reshaped. The ends may be shaped or reshaped either to form a direct connection or coupling with other known coupling parts, generally metallic although also possibly plastic, e.g. a saddle piece with an internal or external thread, or to fit directly into a liquid receiving port, eg. the dispensing head assembly of a multiple-beverage dispenser. A threaded saddle piece gives an easy and general connection to many other fittings. End caps could also be fitted, or pieces adapted to alter the inner or outer diameter of the tube.

Alternatively, shaped plastic connection pieces could be welded onto the ends of the branch pieces to give maximum flexibility on the connections possible.

A manifold generally also includes one or more, usually one, inlet and outlet delivery lines. Inlet and outlet delivery lines could be added to a manifold for the present invention in a similar fashion as described above, or possibly by manual welding. The free ends of the inlet and outlet lines could be left as cut, shaped or reshaped as discussed above for the branch pieces.

Embodiments of the present invention will now be described by way of example only and with reference to the accompanying diagrammatic drawings in which:-
Fig. 1 is a perspective view of a beverage manifold.
Fig. 2 is a plan view of apparatus according to the present invention;
Figs. 3a-3d are side cross-sectional views of the apparatus of Fig. 2 during four stages of manufacture; and
Figs. 4a-c are cross-sectional side views of three different coupling pieces for use as, or connection to, the branch pieces of the manifold in Fig. 1

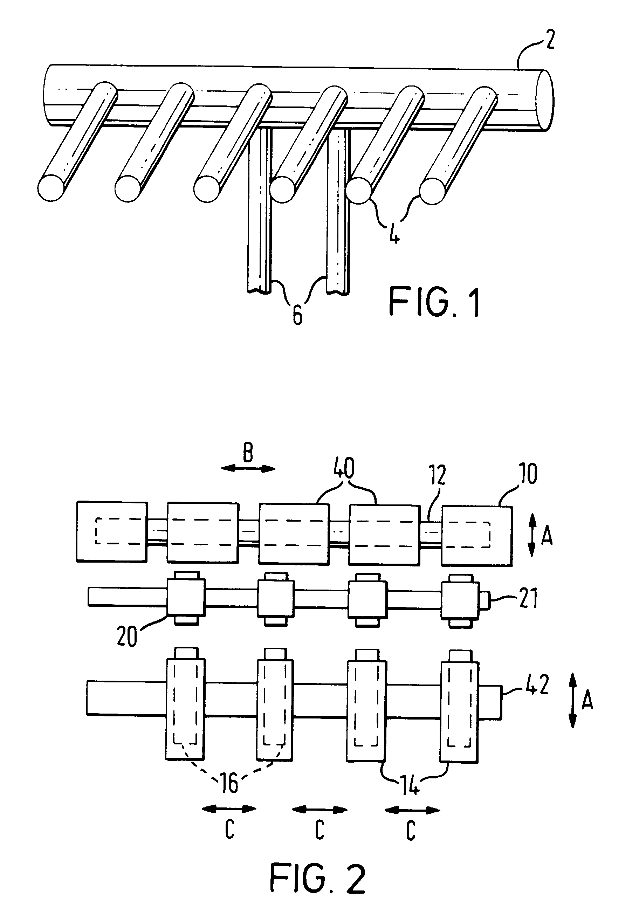

Referring to the drawings, Fig. 1 shows a plastic beverage manifold according to the present invention. The manifold has a main piece 2 and six supply branches 4 attachable using the present invention. It has two inlet/outlet delivery tubes 6, which may also be attachable using the present invention. The manifold may have the same size and shape as a corresponding stainless steel manifold, such that it is able to replace the latter directly in existing beverages or cooling systems. A plastic manifold of small diameter tubing and of any size, shape or design may be made by the present invention. Small diameter tubing is generally regarded to be in the range of 2-25mm.

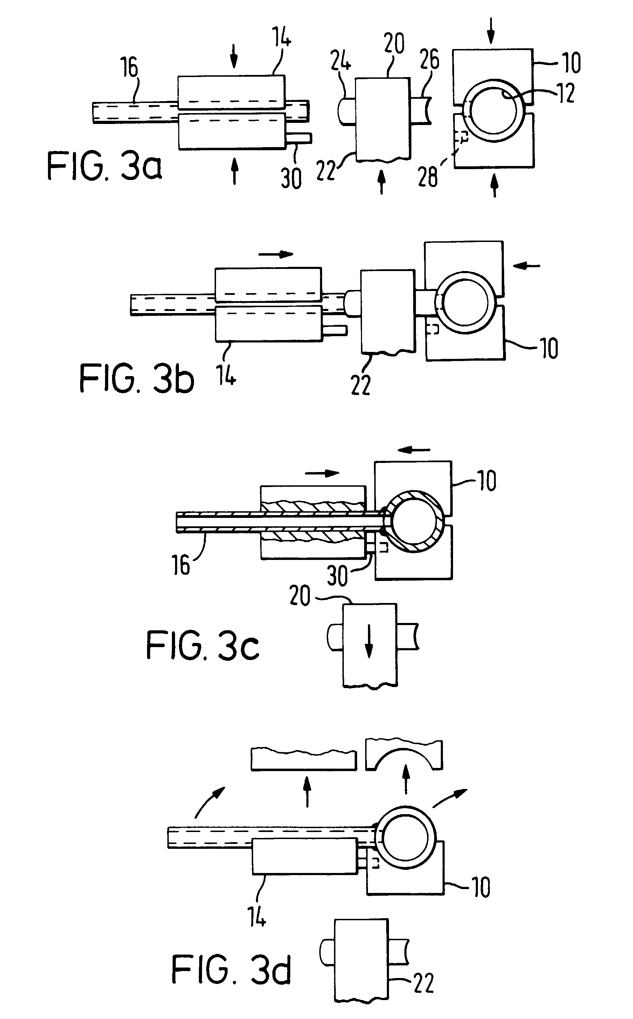

Fig. 2 shows very schematic apparatus having a primary gripping means 10 to hold a main piece of tubing 12, and four secondary gripping means 14 to hold four branch pieces of tubing 16. Each of the gripping means 10, 14 are reversibly moveable as shown by arrows A to effect welding of the pieces as shown in Figs. 3a-3d. Between the primary gripping means 10 and each secondary gripping means 14 is a separate heating element 20.

The primary gripping means 10 comprises four sets of upper and lower jaws 40. Each set of jaws 40 is separately laterally moveable (shown by arrow B) so that the overall gripping means 10 can hold e.g. the main piece 2 of the manifold in Fig 1 with its delivery tubes 6, and prior to attachment of the supply branches 4.

Each of the secondary gripping means 14 are also separately laterally moveable (shown by arrows C) along a supporting bar 42 to allow any regular or irregular spacing between the branch pieces 16. The secondary gripping means 14 can also hold different shaped or sized pieces for simultaneous welding to the main piece (with appropriate local welding conditions for each different branch piece). The secondary gripping means 14 may also be made from a plurality of jaws to allow them to hold irregular or pre-branched pieces. The heating elements 20 are also separately laterally moveable so as to maintain alignment with their respective secondary gripping means 14.

As shown in Fig. 3a, each piece of tubing 12, 16 is held by its respective gripping means 10, 14 and the heating elements 20 are located therebetween. The heating elements are located on arms 22, which are interconnected on the bar 21 shown in Fig. 2 so as to be moveable together. Each heating element 20 has a convex face 24 and a concave face 26 for location against the branch pieces 16 and main piece 12 respectively. The heating elements 20 are metallic having internal heating means for direct or indirect heating of the faces 24,26. Each branch piece 12 will have had a semi-spherical recess formed in its end to be welded so as to match the curvature of the surface of the main piece 10.

In use, the pieces 12, 16 are held by their respective gripping means 10, 14, and the arms 22 are raised to bring the heating elements 20 into alignment with the pieces 12, 16. The gripping means 10, 14 are then moved towards each other so as to engage the surfaces of the pieces 12, 16 to be welded with the heating faces 24, 26 - Fig. 3b.

Once sufficiently heated, the positions of the gripping means 10, 14 are slightly relaxed, and the heating elements 20 withdrawn downwardly by the arms 22 to allow the gripping means 10, 14 to move close together to engage the heated surfaces - Fig. 3c. Once the surfaces have engaged for a predetermined time and pressure, the gripping means 10, 14 are partly or fully withdrawn to release the formed manifold 32.

The primary and secondary gripping means 10, 14 have a recess 28 and corresponding coaxial stud 30 respectively which meet when the gripping means 10, 14 are closest, e.g. as shown in Fig. 3c. The stud 30 and recess 28 predetermine the distance between the two gripping means 10, 14 and thus the displacement pressure between the two welding surfaces. For instance, the gap between the gripping means 10, 14 in Fig. 3c created by the stud 30 may be 1 mm less than the original clearance between the surfaces of the pieces 12, 16, so as to allow some pressure and displacement of plastics material during formation of the welds. The length of the stud 30 and/or recess 28 could be adjustable. Other gap determining means could equally be used to create a predetermined pressure during welding.

In a typical welding cycle for manufacturing a polyethylene manifold with main piece outer diameter of between 12-25mm, branch piece outer diameter of between 6-17mm, and tubing wall thickness of between 1.5mm-2.5mm, there could be a surface-heating time of approximately 10 seconds at 230°C, a joining time of approximately 10 seconds at a pressure of between 0.15MPa and 1MPa, and a cooling time of possibly 10 seconds before removal of the manifold from the gripping means to allow the weld to fully form.

Naturally, larger sized tubing will usually require more heating and possibly higher welding pressures. The gripping means could also be biased or otherwise urged together during welding.

The branches 4 of the manifold could be standard pieces of plastic tubing with their free ends being the normal cut faces, as shown in Fig. 1. To these ends, known coupling pieces can be fitted, possibly with clips, to allow connection to other parts or receiving ports. Alternatively, the free ends of the branches 4 could be shaped or reshaped, eg. by machining or moulding, after, or preferably prior to welding to the manifold. The shaped ends would be able to form a direct connection or coupling with other known coupling parts. Further alternatively, shaped plastic connection or coupling pieces could be welded onto the normal cut ends of the branches 4.

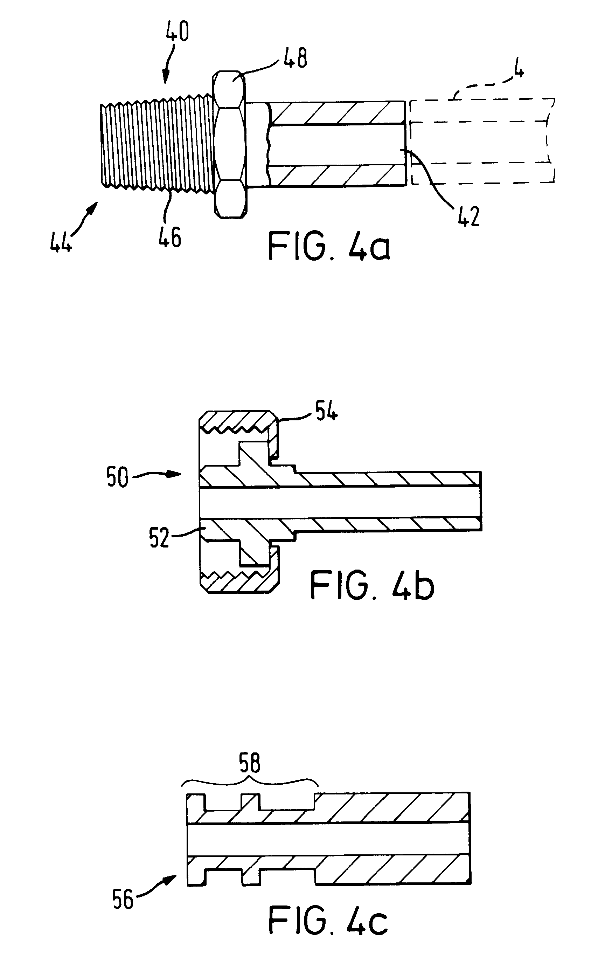

Fig. 4a shows a first plastic coupling piece 40 having a 'standard' end 42, and a shaped end 44 having a screw thread 46 and nut-shaped head 48. Onto the thread 46 could be fitted, easily, quickly and reversibly, many types of known connector pieces or even end caps to seal the line when desired. Such threaded coupling pieces 40 thus provide significant adaptability for change on the manifold.

Fig. 4b shown a second plastic coupling piece 50. Around its shaped end 52 can be placed a threaded nut 54 to secure the end 52 against another part or a port.

Fig. 4c shows a third plastic coupling piece 56 having a shaped end 58 for direct connection into the entry port of a dispensing head assembly of a multiple drinks dispenser. A manifold with branch pieces having ends so shaped could be directly used in a tower assembly, and avoid the need for any metallic connection pieces.

The standard ends of the coupling pieces 40, 50,56 in Figs. 4a-c could either be welded onto existing branch pieces, (e.g. the branches 4 in Fig. 1, and as shown in dashed line in Fig. 4a), or be welded directly onto a manifold as the branch pieces themselves.

The inlet and outlet delivery tubes 6 in Fig. 1 could be similarly shaped or reshaped as discussed above for the branch pieces, or similar plastic connection pieces welded thereto, to effect simplified and/or direct coupling of the delivery tubes 6 to the main source of beverage or coolant.

A particular advantage of the present invention is the multiple forming of branched welds, thereby reducing production time and also confirming uniform consistency of welding. Moreover, because all parts of the apparatus of the present invention are adjustable or changeable to allow it to accommodate simultaneously different sizes of tubing, heat times, different heating elements and irregular weld spacings, the apparatus is adapted to weld easily many different types of manifolds, almost irrespective of the size, shape or design (e.g. existing branches) of the pieces.

The apparatus is therefore very flexible, whilst still providing precision welding with fast, efficient production of small diameter manifolds. The lines and branches from the manifold could also be adapted to connect directly to other parts or ports, simplifying the later installation of the manifold.

## Claims

1. Apparatus to simultaneously weld a plurality of branch pieces of small diameter tubing on to a main piece of small diameter tubing to partly or fully form a plastic manifold, the apparatus comprising gripping means to hold each piece and a plurality of heating elements, at least one gripping means and all the heating means being reversibly moveable between engaged and disengaged positions, wherein the gripping means and/or heating means move to engage the heating means with the surfaces of all the pieces to be welded, and following disengagement of the heating means, the moveable gripping means move(s) to locate all the heated surfaces together for a predetermined time and pressure to effect the welds between the surfaces.

2. Apparatus as claimed in Claim 1 wherein the heating elements are adapted to heat the surfaces of both pieces to be welded together.

3. Apparatus as claimed in Claim 1 or Claim 2 wherein the gripping means for the main piece comprises one or more sets of upper and/or lower discrete jaws.

4. Apparatus as claimed in any one of Claims 1 to 3 wherein the gripping means for the branch pieces comprise one or more sets of upper and/or lower discrete jaws.

5. Apparatus as claimed in Claim 4 wherein each gripping means for the branch pieces is separately laterally moveable relative to the other gripping means along or parallel to the main axis of the main piece.

6. Apparatus as claimed in Claim 5 wherein the heating elements are separately laterally moveable to maintain alignment with the branch gripping means.

7. Apparatus as claimed in any one of the preceding Claims wherein inlet and outlet delivery lines are added to the manifold in a manner described in Claim 1 for addition of the branch pieces to the manifold.

8. A plastic manifold obtainable from the apparatus as defined in any one of Claims 1 to 7.

9. A process for machine welding simultaneously a plurality of branch pieces of small diameter tubing onto a main piece of small diameter tubing to partly or fully form a plastic manifold comprising the steps of
(a) securing the pieces of tubing in gripping means;
(b) locating one or more heating elements against all the surfaces of the tubing to be welded;
(c) withdrawing said heating elements; and
(d) moving at least one of said gripping means to allow the heated surfaces to meet and conjoin for a pre-determined time and pressure to effect the weld.

10. A plastic manifold obtainable from the process as defined in Claim 9.

11. A plastic manifold as claimed in Claim 8 or Claim 10 for the delivery of a beverage or beverage constituent, or for the circulation of a coolant.

12. A branched plastic beverage or coolant manifold wherein two or more of the branches of the manifold have been welded simultaneously to the main piece of the manifold.

13. A branched plastic beverage or coolant manifold wherein the ends of the branch pieces are shaped or reshaped either to form a direct connection or coupling with other coupling parts, or to fit directly into a liquid receiving port.

14. A manifold as claimed in Claim 13 wherein shaped plastic connection pieces are welded onto the ends of the branch pieces.

15. A plastic manifold as claimed in any one of Claims 8 and 10 to 14 wherein the outer diameter of the tubing is within the range 2-25 mm.
